# EUROPEAN PATENT APPLICATION

(11) **EP 2 107 140 A1**
(43) Date of publication of application: **07.10.2009**
(21) Application number: 08381013.5
(22) Date of filing: 31.03.2008
(51) Int. Cl.: D01F 13/00, D01F 9/127, C01B 31/02, D06M 11/00, D06M 13/50

(54) **Procedure for the elimination of polycyclic aromatic hydrocarbons and other volatile and semi-volatile compounds in carbon nanofibres**

(71) Applicant: Grupo Antolín Ingeniería, S.A., 09007 Burgos (ES)
(72) Inventor: Merino Sánchez, Cesar, 09007 Burgos (ES); Gonzáles Moral, Jose Luis, 09007 Burgos (ES)
(74) Representative: Capitan Garcia, Maria Nuria

(57) **Abstract**

The present invention consists of a procedure for eliminating polycyclic aromatic hydrocarbons and other volatile and semi-volatile compounds from carbon nanofibres, also permitting superficial functionalisation and coating of said carbon nanofibres by means of a rotary furnace which permits a series of stages to be carried out following a continuous process. The stages correspond to an initial phase of replacement of the atmosphere with oxygen content surrounding the nanofibres with an inert atmosphere. Prior fluidification of the carbon nanofibres enables the furnace to be fed and eliminates the various volatile and semi-volatile substances. In the same rotary body of the furnace, at the end of the carbon nanofibre passage a final section is established where the functional groups are incorporated and/or a surface coating is applied to the carbon nanofibre surface so that they will be in optimum conditions of use in further applications.

## Description

### OBJECT OF THE INVENTION

The present invention consists of the elimination of polycyclic aromatic hydrocarbons (PAHs) and other volatile and semi-volatile compounds in carbon nanofibres by means of a rotary furnace which permits a series of stages to be carried out in a continuous process.

The process also permits other additional treatments to be carried out such as superficial functionalisation and total or partial coating.
the process stages correspond to a first stage of replacement of the atmosphere surrounding the carbon nanofibres in the entrance tank, with content of reagent gases which react with the carbon nanofibres during the process, degrading them, in particular oxygen, to an inert atmosphere prior to introducing the carbon nanofibres in the rotary furnace.

Following this replacement of the atmosphere the next step is what shall be termed fluidification of the nanofibre to permit the correct and continuous dosage in the internal rotary body of the furnace where the subsequent stages of elimination of PAHs takes place along with the removal of other volatile and semi-volatile compounds.

In the same rotary body a section is established in which, having cleaned the carbon nanofibres of volatile and semi-volatile PAHs, it is possible to proceed to incorporation of functional groups.

In addition, in considered cases they may be subjected to additional superficial coating for example, protection of nanofibres.

### BACKGROUND TO THE INVENTION

There are various manufacturing procedures for carbon nanofibres, some appropriate for obtaining carbon nanofibres in laboratory and other specifically designed for production at an industrial level.

In this latter case it is important to obtain carbon nanofibres using continuous processes as in this way they can be manufactured in industrial quantities.

These continuous processes may be like those described in patent application with publication no. EP1598455 which describes a furnace for manufacture of nanofibres into which a hydrocarbon and a catalyst are introduced.

The subsequent cooling of the residual gases of the process containing among others, PAHs and other volatile and semi-volatile compounds promotes their condensation on the surface of the nanofibre reducing its reactivity.

In addition, some of these compounds deposited on the surface of the carbon nanofibres are carcinogenic and therefore they present an added risk to health, both in their handling in subsequent manufacturing processes in which they are to be used, as well as for users of the end products manufactured with these materials.

The elimination of these residual compounds on the external surface of the carbon nanofibres permits recovery of their superficial reactivity adjusting it to specific applications of the nanofibres, at the same time eliminating the risk to health implicit in the presence of volatile and semi-volatile PAHs ,

Processes are known for eliminating volatile constituents with different substrates using heating in a rotary furnace.

Rotary furnaces exist used for treating carbon substances such as that described in the patent GB250302. This furnace is designed to extract the volatile substance contained in mineral pulverised carbon.

This furnace is not appropriate for carbon nanofibre treatment for various reasons. The carbon nanofibres have an extremely low apparent density and tend to conglomerate forming bundles, creating considerable difficulty in handling in a controlled and safe manner as well as its correct treatment. This handling includes introducing the mass amount into the furnace for an adequate and automated unit of time.

The furnace supply in patent no. GB250302 consists of a screw conveyor which forces the passage of material poured into a tank prior to the furnace interior. This material is not found in a controlled atmosphere, as oxidation of the pulverised carbon is not prevented, and the existence of oxygen in the atmosphere is not critical, either in the feed inlet or in the outlet of the material treated, contrary to the case of the treatment proposed for the carbon nanofibres.

The high reactive nature of the carbon nanofibres requires the absence of gases such as oxygen in the dosing stage in the furnace and a total control of the work atmosphere in all the stages and processes involved in treating nanofibres.

As the furnace in patent GB250302 does onto control the working atmosphere it is not possible following cleaning to carry out gaseous treatments for superficial funcitonalisation nor to coat the carbon to be treated which otherwise has to be subjected to various independent processing using equipment which is also independent.

The present invention establishes a procedure which involves the use of an adequately configured device for obtaining carbon nanofibres free of PAHs and other volatile and semi-volatile constituents, and which permits the incorporation of functional groups on the surface and possible coatings for its use in applications of industrial interest as well as elimination of health risks which may be caused by the presence of these compounds.

### DESCRIPTION OF THE INVENTION

The invention consists of a procedure specially designed for the treatment of carbon nanofibres In this type of carbonaceous materials the edges of the graphitic planes which make up their internal structure are those which admit the formation of chemical links with functional groups or with other chemical compounds.

The cooling of the residual gases at the end of the process of obtaining carbon nanofibres, assists condensation and adsorption of PAHs on the surface of the same, as well as other volatile and semi-volatile compounds, reducing their reactivity, and therefore their capacity for use in industrial applications.

The adsorption of PAH s and other volatile and semi-volatile compounds on the surface of the carbon nanofibres slightly reduces the superficial reactivity of the nanofibres hindering the incorporation of superficial functional groups as well as the application of coatings, limiting for example its performance in compound materials due to the weak fibre/matrix interaction or either the difficulty of dispersion in the matrix considered.

The manipulation of carbon nanofibres entails various difficulties, one of which is the natural tendency to bundle, forming aggregates. In particular these aggregates of nanofibres are large when they form inside the production furnace due to the turbulent movement to which they are subjected during the manufacturing process. Should the material require handling as part of the industrial process, this tendency to bundle, forming aggregates, requires the application of a procedure which will permit these aggregates to be dispersed freeing the carbon nanofibres totally or either forming agglomerates of a smaller size, which is easier to handle. In our case, the procedure is of a physical nature and preferably use will be made of mechanical means in order to disperse the nanofibres. Having freed the aggregates or reduced their size, which results in an apparent densification, the carbon nanofibres act, when handled, similar to a fluid; thus the applied process is termed in this description fluidification procedure.

The procedure for eliminating PAHs and other volatile and semi-volatile compounds from the surface of the carbon nanofibres is carried out in a rotary furnace with a controlled atmosphere which comprises three stages:
1. A stage in which the rotary furnace is fed with the carbon nanofibres which in turn comprises,
   a. replacement of the reactive gases initially surrounding the carbon nanofibres, with an inert atmosphere,
   b. fluidification process consistent with the apparent increase in density of the carbon nanofibres and the homogenisation of the aggregate size.
   c. the introduction of carbon nanofibres into the furnace body,
2. a thermal treatment stage with mechanical agitation which includes,
   d. agitation of the carbon nanofibres by means of rotation and vibration of the furnace body, as well as the heating and transport in the axial direction of the carbon nanofibres; with a controlled atmosphere inside the furnace created by a gaseous flow, composed principally of an inert gas, which circulates along the furnace in the opposite direction to the direction of the axial displacement of the carbon nanofibres, for the carrying of the polycyclic aromatic hydrocarbons and other volatile and semi-volatile compounds desorped from the surface of the carbon nanofibres with which the furnace is fed.
3. a stage of collection of the carbon nanofibres having been treated in a tank situated at the furnace outlet.

The fluidification system is therefore a procedure through which the degree of disaggregation of the carbon nanofibres is increased with mechanical means which assist handling and unbundling; and the result is a greater apparent density.

Optionally in the rotary furnace section in which the surface of the carbon nanofibres is already free of PAHs and other volatile and semi-volatile compounds, a treatment may be applied to enable incorporation of both the superficial functional groups and the protective coatings, based on the introduction of specific gases or treatment vapours in the furnace;

In the first stage it is important for the carbon nanofibres dosed in the interior of the furnace to be in an atmosphere free from reactive gases or vapours such as oxygen, which could, for example cause combustion thereof during the process.

Once inside the rotary furnace the carbon nanofibres advance along the furnace, in an axial direction due to the inclination of the main rotary body of the furnace. A gaseous flow circulates in the direction opposite that of the advance of the carbon nanofibres carrying the volatile components desorped from the carbon nanofibres due to the action of the high temperature.
the introduction of an inert gaseous flow to the carbon nanofibre outlet of the rotary furnace (hereinafter the outlet), and the evacuation of this gas in addition to the substances desorpbed or removed from the nanofibres in the entry of the nanofibres in said rotary furnace (herinafter the entry) permits the volatile and semi-volatile components on the external surface of these nanofibres to be carried along.

The PAHs and other volatile and semi-volatile compounds are desorped from the surface of the carbon nanofibres before they reach the outlet.

In this final section in which the carbon nanofibres are already free of PAHs , and other volatile and semi-volatile compounds, the procedure according to a mode of embodiment of the invention considers the possibility of an additional stage for the optional treatment of the carbon nanofibres, by either incorporating functional groups on it surface or by applying a coating thereto.

The incorporation of functional groups on the surface of the nanofibres is what we propose to term in this description as functionalisation.

The various options of this functionalisation of the nanofibres shall be described below in the detailed description of the invention.

The application of a coating refers to the formation of a protective layer on the surface of the carbon nanofibres, which in some cases may have an additional function of compatibilisation with the matrix of the material of the compound material of which they may become part in subsequent processes.

In all these cases, the transport and elimination of the PAHs and other volatile and semi-volatile compounds are assisted by the rotating movement of the rotary body of the furnace and the simultaneous application of mechanical vibration to prevent the carbon nanofibres from adhering to the internal walls of the furnace, and the presence of blades on said walls which carry and remove the nanofibres.

In the event that the furnace heating system is divided into sectors, it is easier to exercise greater control over the temperature distribution, permitting the use of different temperature profiles throughout the axial length of the rotary body of the oven.

The interface between the rotary body of the furnace and the fixed part of the dosing system requires a sealing system that minimises the passage of gas through it, and which, together with the greater pressure existing inside the furnace with respect to the ambient pressure in the exterior prevents air from entering, and oxygen in particular.

The same occurs in the interface between the rotary body of the furnace and the fixed part corresponding to the collector system of the already treated nanofibres. Said outlet should in addition communicate with a sealed chamber for collecting the carbon nanofibres following their treatment.

The means of achieving these stages and the incorporation of optional and additional stages will be described in the detailed description of the invention in which use will be made of examples of embodiments.

### DESCRIPTION OF THE DRAWING

This descriptive report is complemented with a diagram illustrating the cleaning and treatment procedure of carbon nanofibres corresponding to the preferred example, which is at no time restrictive of the invention.

Furthermore, the figure shows a diagram of the main elements of the furnace and other components which permit the cleaning procedure to be carried out and optionally the subsequent incorporation of functional groups and coatings on the surface of the carbon nanofibres.

### DETAILED EXPLANATION OF THE INVENTION

The invention consists of a procedure for the desorption and elimination of PAHs and other volatile and semi-volatile compounds present in carbon nanofibres, making use of a device, principally comprising a rotary furnace (5) and a series of complementary elements, specially designed to permit the execution of various stages involved in the procedure.

The stages of the invention process have been indicated in the above description, and the various modes of embodiment are contained in the dependant claims 2 to 33 which are incorporated in this description by reference.

Optionally, the installation permits the incorporation of elements for carrying out the additional stages of superficial functionalisation and coating of the carbon nanofibres once the process of desorption and elimination of PAHs and other volatile and semi-volatile compounds has been completed.

Although the stages involved in the procedure have been described in the description of the invention in this section, they is further emphasised by providing an example of the embodiment of a rotary furnace (5) following as far as possible the order established for the stages of the procedure applied on the carbon nanofibres.

Having obtained the carbon nanofibres they should be cleaned to remove superficial PAHs and other volatile and semi-volatile compounds resulting from their manufacturing procedure , in order to permit subsequent superficial functionalisation treatments and/or coating in order to adapt them to possible industrial applications for which they may be destined.

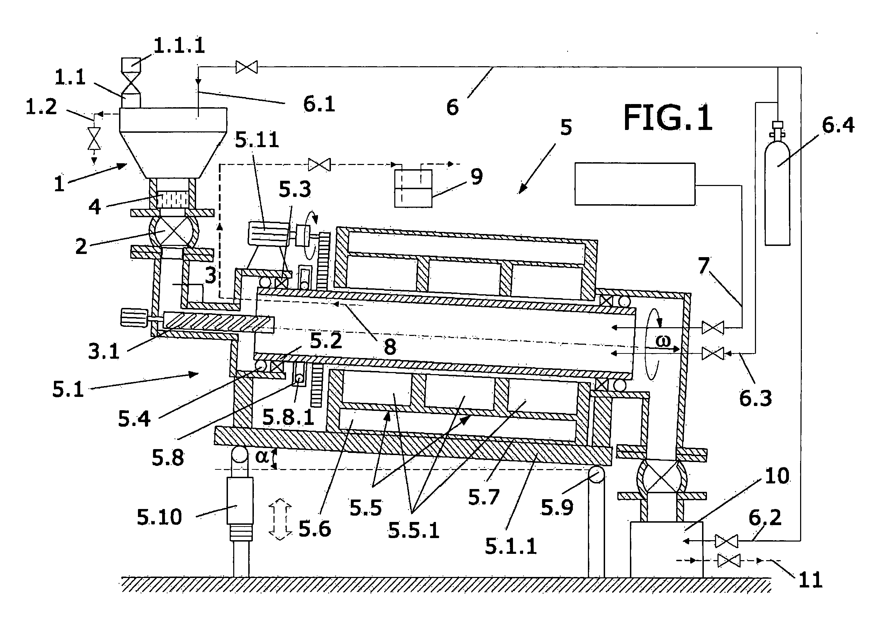

Given that the carbon nano-fibrse are to be heat treated, it is necessary at all times to control in the furnace (5) interior the amount of oxygen and other gases which might react with them, as undesirable reactions could occur such as, for example, the combustion of carbon nanofibres. For the description of the various parts of the furnace (5) figure 1 will be used, as it shows the transport and flows of the carbon nanofibres and the different gases involved in treating the fibres. This figure also shows a diagram of the different construction elements, together with the furnace.

In the example of the device used for this description use is made of a feed tank (1) for the furnace (5 ) in which the atmosphere surrounding the carbon nanofibres to be treated is replaced at least in part by an inert atmosphere.

For this purpose the feed tank (1) is sealed by means of various valves which close the entries and outlets converging therein. In particular, the tank has an inlet (1.1) for introducing the carbon nanofibres to be treated also with a sealed closure (1.1.1); and it is provided moreover with an inlet (6.1) for inert gases from the main gas pipe (6) carrying the inert gases.

The graphic representation shows a source (6.4) of inert gas supply.

The feed tank (1) is also provided with an outlet pipe (1.2) for evacuation of the gases initially present in the interior as they are displaced by the inert gases introduced. Obviously the feed tank (1) also has an outlet for the carbon nanofibres to pass into the furnace (5).

The circulation of inert gases brings the possible presence of oxygen or other reactive gases which may be present in the feed tank (1). This replacement may be complete, that is replacing all the gas present initially with inert gases or partial, so that a predetermined amount of reactive gases (for example lower than a pre-established reference value) remains in the outlet gases.

Having completed the replacement process, the entry valves for the inert gases (6.1) are closed along with that of the outlet valves (1.2) of the evacuated gases, opened until now, leaving the feed tank (1) sealed. Subsequently the closure means (2) situated at the feed tank (1) outlet is opened in order to permit supply of carbon nanofibres from the tank into the furnace (5).

In order to maintain uninterrupted supply to the furnace (5), it (5) may be provided with more than one feed tank (1) for replacing the reactive gases surrounding the carbon nanofibres until the amount is reduced to below the pre-established reference value.

Given that the use of valves for establishing the opening and closure of each pipe is too detailed, for the sake of clarity each valve has not been separately referenced although they have been graphically represented, thus focusing the description on the stages and devices which permit such stages to be carried out.

The handling of the carbon nanofibres is complex and difficult due to the considerable degree of bundling that occurs and as a result of this its apparent very low density, which prevents easy transport through the pipe.

In order to correct this effect and to facilitate carbon nanofibre transport during the treatment process having been in the feed tank (1) in an inert atmosphere, a mechanical process of fluidification takes place in an appropriate fluidificaion device (4) situated between the feed tank (1) and the rotary furnace entrance (5)

The mechanical fluidification device (4) consists of a mechanical gentle grinding and filtering system suitable for working continuously during the dosing of the carbon nanofibres in the furnace (5) from the feed tank (1) through a valve (2) once it has been opened

The mechanical fluidification device (4) for the carbon nanofibres forces the carbon nanofibres through one or more perforations or narrow parts; for example configuring a sieve. The forced passage may be achieved by means of a part which sweeps over the perforations or narrow parts.

The nanofibre outlet valve (2) of the fluidification device (4) is closed during the previous process of inertising the feed tank(1.

The carbon nanofibres which have passed through the fluidification device (4) continue their advance firstly through the outlet valve (2) and subsequently through the main feed pipe (3), which incorporates an active dragging system (3.1) for example, a screw conveyor, for transporting the carbon nanofibres to the furnace (5) interior through the furnace opening.

The procedure according to the invention is a continuous procedure. In order to assist this continuous process to extend its duration beyond the feed tank (1) capacity, an alternative considered would be to use more than one feed tank (1) with their corresponding closure valves (1.1.1, 2) sealing and fluidification devices (4) should these be necessary. The use of more than one feed tank (1) permits the replacement in one tank (1) of the atmosphere present therein for another inert atmosphere while the other feed tank (1) supplies the furnace (5), thus avoiding the need to stop the process to renew the load of carbon nanofibres to be treated. In other words this system will ensure an uninterrupted furnace (5) feed.

The furnace is the place where the carbon nanofibres receive the appropriate heat treatment to eliminate PAHs and other volatile and semi-volatile compounds as well as possible subsequent treatments of superficial functionalisation and coating. This heat treatment consists mainly of elevating the temperature of the furnace to between 120° and 1000° although preferably the working temperature will be between 300-600°.

The temperature elevation is achieved due to means for heating (5.5) the furnace (5) which may form a single unit or which may be grouped into independent heating modules (5.5.1)which enable the temperature to be adjusted to different values along the axial length of the furnace(5). This adjustment may compensate the different heat losses occurring along the axial direction in order to ensure the same temperature, or either it may serve to define a variable profile of temperatures along the furnace (5) in the axial coordinate, appropriate to the treatment to be applied to the carbon nanofibres.

For the heating process in this example of an embodiment, the furnace (5) is provided with an external thermally insulated housing (5.7) inside which the heating means (5.5) are located in addition to a thermally insulated body.

The internal rotary body (5.2) rotates inside the furnace (5) by means of support rollers (5.4) which permit it to turn in respect of the support structure (5.1.1.) of the furnace (5) and an activation device or system (5.11)

Between the mobile or rotary parts (5.2) of the furnace (5) and the fixed parts (5.1) situated at both ends of the internal rotary body (5.2) corresponding to the furnace (5) entrance and outlet, annular closures (5.3) are provided for sealing in such a way that they permit the rotation of the internal rotary body (5.2), keeping the interior sealed tight as required for the process.

For the purpose of preventing oxygen from entering the furnace (5) interior, a working atmosphere is ensured in the interior with a pressure greater than than the external ambient pressure, so that any possible entry of gases through the annular sealing closures (5.3) will always occur from the inside of the interior rotary body (5.2) of the furnace towards the outside, thus preventing the accidental entry of ambient air in the interior.

The thermal treatment of the carbon nanofibres is accompanied by mechanical agitation consistent with turning action produced by the rotation of the internal rotary body (5.2) of the furnace. This turning is also optionally assisted by blades (not shown in the figure to ensure clarity of the diagram) mounted on the interior rotary body (5.2) of the furnace (5) which facilitates carrying and movement of the nanofibres.

In order to avoid the natural tendency for the carbon nanofibres to adhere to the internal surface of the internal rotary body (5.2) and to assist them in falling away, the furnace (5) incorporates a vibratory device (5.8)able to cause vibration on the internal surface of the internal rotary body (5.2) of the furnace (5).

In the example of an embodiment shown, the vibratory device (5.8) has been constructed from housings solid to the structure of the internal rotary body (5.2) which incorporate in its interior a number of balls (5.8.1) which impact by moving around inside their housings given the slack in play, as they turn together with the internal rotary body (5.2) of the furnace (5). The impact of these balls (5.8.19 against the walls of the housings are the source of mechanical vibration in this example of an embodiment.

The axial transport of the nanofibres is produced through gravity due to the inclination applied to the internal rotary body (5.2) of the furnace (5) with respect to the horizontal plane. The degree of inclination combined with the speed of rotation of the internal rotary body (5.2) of the furnace (5) permits control of the speed of progress of the carbon nanofibres in its interior. The control of the speed of advance also gives rise to a control of the residence time of the nanofibres in the furnace (5).

In the preferred embodiment, the inclination of the internal rotary body (5.2) of the furnace (5) is possible due to an initial gyratory support (5.9) close to the furnace outlet and a second height adjustable support (5.10) on the other side. The elevation through this second support (5.10) permits adjustment of the degree of inclination (α) of the internal rotary body (5.2) of the furnace (5). The degree of inclination (α) together with the speed (ω) of rotation are variables which determine the speed of axial advance of the carbon nanofibres within the furnace (5) given that during rotation, these are raised until they fall through gravity to an advanced point according to the axial coordinate depending on the degree (α) of inclination.

It is considered that the activation system (5.11) which turns the internal rotary body (5.2) of the furnace (5) of this example of a preferred embodiment is provided with the capacity for variation or regulation of the speed (ω)of rotation.

Together with the carbon nanofibres, advancing in the interior of the furnace (5) a gaseous flow is established principally comprising an inert gas which is displaced in the opposite direction of the axial displacement of the carbon nanofibres which carry the desorped PAHs and other volatile and semi volatile compounds resulting from the effect of the temperature inside the furnace (5).

This gaseous flow is introduced through feed pipes (6.3 and 7) situated at the furnace outlet (5). In this example of an embodiment use is made of an inert gas feed pipe (6.3) and a pipe (7) able to transport gas for the functionalisation of carbon nanofibres , of a coupling agent or a precursor for the application of a coating on the surface of the carbon nanofibres.

The gas introduced in the furnace (5) sweeos the desorped substances of the carbon nanofibres along to the entrance of the furnace (5) where there is an evacuation pipe (8) for the internal gases. The outlet point through the evacuation pipe (8) for evacuating the internal gases is situated at the entry of the furnace (5) preferably next to the feed point of the carbon nanofibres.

With the elements described to this point the carbon nanofibres are transported together with mechanical agitation along the furnace (5) and in pre-established temperature conditions. In these temperature conditions the PAHs and volatile and semi-volatile compounds are desorped from the carbon nanofibres and pass into the gaseous flow which circulates in the furnace interior.

The carrying gases together with the PAHs and other volatile and semi-volatile compounds desorped from the carbon nanofibres are evacuated through the evacuation pipe (8) to a gas washing system (9) in which the carrying gases are separated from the PAHs and other volatile and semi-volatile compounds through condensation thereof, preventing their emission into the environment and permitting optional reuse of the carrying gases.

In a preferred embodiment, the gas washing system (9) is carried out in a tank with water through bubbling of the mixture formed by carrying gases together with the PAHs and other volatile and semi-volatile compounds so that these cool, condensing in the interior of the tank, retained by the liquid and releasing the gaseous components of the mixture.

Optionally the PAHs may be eliminated and other volatile and semi-volatile compounds of the carrying gases by other methods such as for example through their combustion in the interior of the furnace when they have passed through the evacuation pipe (8).

As the carbon nanofibres advance axially along the furnace (5) in the opposite direction to the gaseous carrying flow, they reach an intermediate point in the length of the furnace (5), prior to reaching the outlet, a point from which a section is defined up to the end of the route of the carbon nanofibres where they are now free from PAHs and other volatile and semi-volatile compounds.

In the preferred embodiment of the example, between the point where the nanofibres are now free from volatile substances and the furnace (5) outlet a section is defined in which the atmosphere formed by the gas carrying flow , within which the carbon nanofibres circulate, contains an additional controlled amount of active compounds which, at a temperature which is also controlled, are able to react with the clean surface of the carbon nanofibres, generating therein various functional groups able to interact in subsequent processes with other substances. That is, in this final section a superficial fucntionalisation process of said carbon nanofibres is carried out by means of incorporation to the internal gas flow of the furnace (5) of a substance with the capacity to create one or more types of functional groups on the surface of the carbon nanofibres.

Optionally the controlled incorporation of active compounds to the carrying gases in this final section of the furnace (5) may also be made, in order to carry out both the addition of coupling agents to the surface of the carbon nanofibres and to apply a protective coating to said surface.

In the example shown as a preferred embodiment means of heating (5.5) the furnace (5) have been considered, divided into various independent heating modules (5.5.1) permitting control of different temperatures along the different furnace sections (5) based on the specific requirements of the process associated with each one of these, so that, for example, the temperature in the first section in which desorption occurs and the PAHs and other volatile and semi-volatile compounds are carried does not necessarily need to be the same as the section situated close to the furnace (5) outlet in which the active compounds are incorporated. This independent overall control may be achieved by incorporating an independent temperature control in each heating module (5.5.1).

In the context of the invention, functionalisation is understood to be the process for incorporating on the surface of the nanofibres functional groups activating that surface and permitting it in this way to react through them with other materials which are to be incorporated in subsequent processes and applications.

The functionalisation of the nanofibres is achieved by introducing substances into the furnace (5) which at an adequate process temperature react with the graphite surface of the carbon nanofibres forming in the same functional groups which are considered necessary according to the final application for which the carbon nanofibres are destined.

These substances incorporate the flow of the carrying gases (5) through the specific pipe (7) situated at the end of the furnace (5) outlet. The compounds used may be organic, inorganic, organometallic compounds or a mixture thereof.

From among these substances likely to permit functionalisation of the carbon nanofibres the following may be cited although without being a restrictive list: air, oxygen, carbon dioxide, ammonia, ozone, hydrogen peroxide, hydrogen fluoride, hydrogen chloride, hydrogen cyanide, and water vapour.

Optionally, another preferred embodiment consists of the possibility that the nanofibres are able to establish links with other existing substances on the surfaces of the carbon nanofibres by means of a reaction with one or more coupling agents, which comprise bi-functional molecules able on one hand to form stable links with the surface of the carbon nanofibres and on the other to form stable links with other substances, for example in order to compatibilise the use of carbon nanofibres with polymeric matrices in which they will be embedded.

As an example of coupling agents the following compounds may be cited, although this list is in no way restrictive: organosilanes, organocirconates, organotitanates, organoaluminates or Grignar reagents.

Optionally another preferred embodiment permits in the final section of the furnace (5) a coating of at least part of the clean surface of the carbon nanofibres generating a protective layer of material on the surface of the carbon nanofibres by means of chemical deposition in vapour phase based on the adequate compounds known as precursors, for example in order to protect the carbon nanofibres from undesirable reactions in the event that they are submitted to aggressive conditions in subsequent processes.

The precursors used may be inorganic, organometallic, compounds or a mixture of both, for example but not to be considered in any way as a restrictive list the following may be cited: organometallic compounds, carbon monoxide, halide, salts of Si, Zr, B, Al, W, Ni, Ti, Co, Zn, Y, Mg, Cu, Sn, Fe, Sb, V, Ag, Ru, etc., or mixtures thereof.

Following treatment of the nanofibres they reach a final reception tank (10)to which a pipe (6.2) carrying inert gas for the sweeping of reactive gases which subsequently pass out through a second outlet pipe (11). Having established the appropriate atmosphere the treated nanofibres are able to leave the furnace.

## Claims

**1.** Procedure for the elimination of polycyclic aromatic hydrocarbons and other volatile and semi-volatile compounds in carbon nanofibres **characterised in that** it consists of processing of the carbon nanofibres by means of a rotary furnace (5)with a controlled atmosphere which comprise three stages:
1. A stage in which the rotary furnace is fed with the carbon nanofibres which in turn comprises,
a. a replacement process of the reactive gases initially surrounding the carbon nanofibres with an inert atmosphere,
b. a fluidification process consistent with the apparent increase in the apparent density of the carbon nanofibres and the homogenisation of the aggregate size.
c. the introduction of carbon nanofibres into the furnace body (5) interior,
2. a thermal treatment stage with mechanical agitation which includes,
the agitation of the carbon nanofibres by means of rotation and vibration of the furnace (5) body, as well as the heating and transport in the axial direction of the carbon nanofibres; with a controlled atmosphere inside the furnace created by a gaseous flow, composed principally of an inert gas, which circulates along the furnace in the opposite direction to the direction of the axial displacement of the carbon nanofibres, for carrying the polycyclic aromatic hydrocarbons and other volatile and semi-volatile compounds desorped from the surface of the carbon nanofibres with which the furnace is fed.
3. A stage of collection of the carbon nanofibres having been treated in a tank (12) situated at the furnace (5) outlet.

**2.** Procedure for the elimination of polycyclic aromatic hydrocarbons and other volatile and semi-volatile compounds according to claim 1, **characterised in that** the replacement of the reactive gases which initially surround the carbon nanofibres is carried out in the interior of a feed tank (1) at the entry of the furnace (5) which is provided with an entrance (1.1) and an outlet for the carbon nanofibres, which may be enclosed in the feed tank (1) in a sealed manner by means of the closure devices in addition to an inert gas entry (6.1) and outlet (1.2) for the extraction of the reactive inert gases in the interior of the feed tank (1) until the their removal is complete.

**3.** Procedure for eliminating polycyclic aromatic hydrocarbons and other volatile and semi-volatile compounds according to claim 2, **characterised in that** with the entry (1.1)and outlet means of the carbon nanofibres closed and the means of closure of the inert gas inlet (6.1) and the reactive gas outlet (1.2) open respectively, circulation is maintained between said entry (6.1) and outlet (1.2) of reactive gases until the reduction of the amount of reactive gases contained in the feed tank (1) up to a value lower than a pre-established reference value is obtained.

**4.** Procedure for eliminating polycyclic aromatic hydrocarbons and other volatile and semi-volatile compounds according to any of claims 2 and 3 **characterised in that** following reduction of the amount of reactive gases surrounding the carbon nanofibres in the feed tank (1) to the value of the pre-established reference, in a first step the means of closure of the gas inlet and outlet are closed and in a second step the means of closure (2) situated at the outlet of the feed tank (1) to enable the supply of the carbon nanofibres from the feed tank to the furnace interior (5).

**5.** Procedure for eliminating Polycyclic aromatic hydrocarbons and other volatile and semi-volatile compounds according to any of claims 2 to 4 **characterised in that** the furnace (5) is provided with more than one feed tank (1) for the replacement of reactive gases which surround the carbon nanofibres until their quantity is reduced to below a pre-established reference value, so that the furnace (5) can be fed in an uninterrupted manner.

**6.** Procedure for eliminating Polycyclic aromatic hydrocarbons and other volatile and semi-volatile compounds according to claims 1 or 2 **characterised in that** following the process of replacement of the amount of reactive gases surrounding the carbon nanofibres up to a pre-established reference for an inert atmosphere, and prior to the introduction of the nanofibres in the interior of the furnace (5) body, the fluidification of the nanofibres is carried out by means of mechanical procedures.

**7.** Procedure for eliminating Polycyclic aromatic hydrocarbons and other volatile and semi-volatile compounds according to claim 6 **characterised in that** the mechanical fluidification procedures of the carbon nanofibres consist of a forced passage of said carbon nanofibres through one or more perforations of narrow parts.

**8.** Procedure for eliminating Polycyclic aromatic hydrocarbons and other volatile and semi-volatile compounds according to claim 7, **characterised in that** the perforations take the form of a sieve.

**9.** Procedure for eliminating Polycyclic aromatic hydrocarbons and other volatile and semi-volatile compounds according to claim 7 or 8 **characterised in that** the forced passage is carried out by the action of a part which sweeps over the perforations or narrow parts.

**10.** Procedure for eliminating polycyclic aromatic hydrocarbons and other volatile and semi-volatile compounds according to claims 1 and 6, **characterised in that** the introduction of the carbon nanofibres once they have been fluidified are carried into the furnace (5) by means of transport from the feed tank outlet to the interior of the furnace (5).

**11.** Procedure for eliminating Polycyclic aromatic hydrocarbons and other volatile and semi-volatile compounds according to claim 10, **characterised in that** the system (3.1) for conveying the carbon nanofibres consists of a screw conveyor.

**12.** Procedure for eliminating polycyclic aromatic hydrocarbons and other volatile and semi-volatile compounds according to claim 11 **characterised in that** the internal rotary body (5.2) of the furnace (5) is provided with means for varying its speed (ω) of rotation.

**13.** Procedure for eliminating Polycyclic aromatic hydrocarbons and other volatile and semi-volatile compounds according to claim 12, **characterised in that** the furnace (5) is provided with means for varying its inclination.

**14.** Procedure for eliminating polycyclic aromatic hydrocarbons and other volatile and semi-volatile compounds according to claim 12 and 13 **characterised in that** the speed of the axial advance and the residence time of the carbon nanofibres in the furnace (5) is carried out by a combined effect of the furnace inclination (5) and the rotation movement of the rotary body thereof.

**15.** Procedure for eliminating polycyclic aromatic hydrocarbons and other volatile and semi-volatile compounds according to claim 1 **characterised in that** the furnace (5) incorporates means (5.8) for applying mechanical vibration on the internal rotary body (5.2) to prevent the nanofibres from adhering to the internal walls of the furnace (5).

**16.** Procedure for eliminating polycyclic aromatic hydrocarbons and other volatile and semi-volatile compounds according to claim 15 **characterised in that** the means (5.8) for applying mechanical vibration in order to prevent the nanofibres from adhering to the internal walls of the furnace (5) comprise balls (5.8.1) which act through impact.

**17.** Procedure for eliminating polycyclic aromatic hydrocarbons and other volatile and semi-volatile compounds according to claim 16, **characterised in that** the internal rotary body (5.2) is provided with housings solid to the structure which incorporate in their interior moveable balls (5.8.1) due to the play available, so that they cause impact in the interior of the housings with the rotation of the internal rotary body (5.2) of the furnace (5).

**18.** Procedure for eliminating polycyclic aromatic hydrocarbons and other volatile and semi-volatile compounds according to claim 1 **characterised in that** the internal rotary body (5.2) of the furnace (5) is provided with internal blades for improved agitation of the carbon nanofibres in the interior of the internal rotary body (5.2) of the furnace (5).

**19.** Procedure for eliminating polycyclic aromatic hydrocarbons and other volatile and semi-volatile compounds according to claim 1 **characterised in that** the means (5.5)for heating the furnace (5) comprise more than one heating module (5.5.1).

**20.** Procedure for eliminating polycyclic aromatic hydrocarbons and other volatile and semi-volatile compounds according to claim 19, **characterised in that** each heating module (5.5.1) is provided with an independent temperature control.

**21.** Procedure for eliminating polycyclic aromatic hydrocarbons and other volatile and semi-volatile compounds according to claim 1, **characterised in that** the working temperature in the interior of the rotary body of the furnace (5) is between 120° to 1000°C.

**22.** Procedure for eliminating polycyclic aromatic hydrocarbons and other volatile and semi-volatile compounds according to claim 21, **characterised in that** the working temperature in the interior of the rotary body of the furnace (5) is between 300° to 600°C.

**23.** Procedure for eliminating polycyclic aromatic hydrocarbons and other volatile and semi-volatile compounds according to claim 1 **characterised in that** the working atmosphere in the interior of the rotary body of the furnace (5) is above atmospheric pressure.

**24.** Procedure for eliminating polycyclic aromatic hydrocarbons and other volatile and semi-volatile compounds according to claim 1 **characterised in that** the extraction of the carrier gases together with the desorped compounds is carried out by means of a pipe (8) which evacuates the internal gases of the furnace situated at the furnace entrance (5) preferably close to the feed point of the carbon nanofibres.

**25.** Procedure for eliminating polycyclic aromatic hydrocarbons and other volatile and semi-volatile compounds according to claim 1, **characterised in that** the carrier gas extracted from the furnace (5) with the desorped compounds passes through a gas washing system (9) for condensation of said compounds.

**26.** Procedure for eliminating polycyclic aromatic hydrocarbons and other volatile and semi-volatile compounds according to claim 1, **characterised in that** there is an intermediate point of the axial route of the internal rotary body (5.2) of the furnace (5) which defines a final section from said point to the end of the axial route of the rotary body of the furnace (5), where the carbon nanofibres are free from polycyclic aromatic hydrocarbons and other volatile and semi-volatile compounds.

**27.** Procedure for eliminating polycyclic aromatic hydrocarbons and other volatile and semi-volatile compounds according to claim 1 **characterised in that** in the final section where the nanofibres are free from polycyclic aromatic hydrocarbons and other volatile and semi-volatile carbons a process of superficial functionalisation is carried out on said carbon nanofibres through the incorporation to the gas flow in the furnace (5) interior of a substance with the capacity for creating one or more types of functional groups on the surface of the carbon nanofibres.

**28.** Procedure for eliminating polycyclic aromatic hydrocarbons and other volatile and semi-volatile compounds according to claim 27, **characterised in that** the substance with capacity for creation of one or more functional groups on the surface of the carbon nanofibres is an organic, inorganic, organometallic compound or a mixture of these.

**29.** Procedure for eliminating polycyclic aromatic hydrocarbons and other volatile and semi-volatile compounds according to claim 28 **characterised in that** the substance with capacity for creation of one or more functional groups on the surface of the carbon nanofibres is among one of the following: air, oxygen, carbon dioxide, ammonia, ozone, hydrogen peroxide, hydrogen fluoride, hydrogen chloride, hydrogen cyanide, and water vapour.

**30.** Procedure for eliminating polycyclic aromatic hydrocarbons and other volatile and semi-volatile compounds according to claims 27-29 **characterised in that** on some of the functional groups existing on the surface of the carbon nanofibres one or more coupling agents are made to react comprising bi-functional molecules for compatibilising the carbon nanofibres with other polymeric substances with which they are required to interact in subsequent applications or processes.

**31.** Procedure for eliminating polycyclic aromatic hydrocarbons and other volatile and semi-volatile compounds according to claim 30 **characterised in that** the coupling agents constituting bi-functional molecules are among the following: organosilanes, organocirconates, organotitanates, organoaluminates or Grignar reagents.

**32.** Procedure for eliminating polycyclic aromatic hydrocarbons and other volatile and semi-volatile compounds according to claim 27-31 **characterised in that** in the final section where the carbon nanofibres are free of polycyclic aromatic hydrocarbons and other volatile and semi-volatile compounds, a coating process is carried out on at least one part of the surface of the carbon nanofibres by means of a chemical deposition in vapour phase of adequate precursor compounds.

**33.** Procedure for eliminating polycyclic aromatic hydrocarbons and other volatile and semi-volatile compounds according to claim 32 **characterised in that** the precursor compounds are among the following: organometallic compounds, carbon monoxide, halide, salts of Si, Zr, B, Al, W, Ni, Ti, Co, Zn, Y, Mg, Cu, Sn, Fe, Sb, V, Ag, Ru, etc., or mixtures thereof.

**34.** Carbon nanofibres obtained from a procedure according to any of claims 1 to 26 where their surface is found free of polycyclic aromatic hydrocarbons and other volatile and semi-volatile compounds.

**35.** Carbon nanofibres obtained from a procedure according to any of claims 27 to 33 where their surface is provided with functional groups.

**36.** Carbon nanofibres obtained from a procedure according to any of the previous claims where their surface is provided with one or more coupling agents comprising bi-functional molecules able on one hand to form stable links with the surface of the carbon nanofibres and on the other to also form stable links with other substances.

**37.** Carbon nanofibres obtained from a procedure according to claim 36 in which the coupling agents are among the following: organosilanes, organocirconates, organotitanates, organoaluminates or Grignar reagents.

**38.** Carbon nanofibres obtained from a procedure according to any of the previous claims where their surface is provided with a coating provided by a chemical deposition in vapour phase based on precursor compounds to protect the carbon nanofibres from undesirable reactions

**39.** Carbon nanofibres obtained from a procedure according to claim 38 in which the precursor agents may be inorganic, organometallic compounds, carbon monoxide, halide, salts of Si, Zr, B, Al, W, Ni, Ti, Co, Zn, Y, Mg, Cu, Sn, Fe, Sb, V, Ag, Ru, etc., or mixtures thereof.

## Amended claims

### Amended claims in accordance with Rule 137(2) EPC.

**1.** Procedure for the elimination of polycyclic aromatic hydrocarbons and other volatile and semi-volatile compounds in carbon nanofibres **characterised in that** it consists of processing of the carbon nanofibres by means of a rotary furnace (5)with a controlled atmosphere which comprise three stages:
1. A stage in which the rotary furnace is fed with the carbon nanofibres which in turn comprises,
a. a replacement process of the reactive gases initially surrounding the carbon nanofibres with an inert atmosphere,
b. a fluidification process consistent with the apparent increase in the apparent density of the carbon nanofibres and the homogenisation of the aggregate size.
c. the introduction of carbon nanofibres into the furnace body (5) interior,
2. a thermal treatment stage with mechanical agitation which includes,
the agitation of the carbon nanofibres by means of rotation and vibration of the furnace (5) body, as well as the heating and transport in the axial direction of the carbon nanofibres; with a controlled atmosphere inside the furnace created by a gaseous flow, composed principally of an inert gas, which circulates along the furnace in the opposite direction to the direction of the axial displacement of the carbon nanofibres, for carrying the polycyclic aromatic hydrocarbons and other volatile and semi-volatile compounds desorbed from the surface of the carbon nanofibres with which the furnace is fed.
3. A stage of collection of the carbon nanofibres having been treated in a tank (12) situated at the furnace (5) outlet.

**2.** Procedure for the elimination of polycyclic aromatic hydrocarbons and other volatile and semi-volatile compounds according to claim 1, **characterised in that** the replacement of the reactive gases which initially surround the carbon nanofibres is carried out in the interior of a feed tank (1) at the entry of the furnace (5) which is provided with an entrance (1.1) and an outlet for the carbon nanofibres, which may be enclosed in the feed tank (1) in a sealed manner by means of the closure devices in addition to an inert gas entry (6.1) and outlet (1.2) for the extraction of the reactive inert gases in the interior of the feed tank (1) until the their removal is complete.

**3.** Procedure for eliminating polycyclic aromatic hydrocarbons and other volatile and semi-volatile compounds according to claim 2, **characterised in that** with the entry (1.1)and outlet means of the carbon nanofibres closed and the means of closure of the inert gas inlet (6.1) and the reactive gas outlet (1.2) open respectively, circulation is maintained between said entry (6.1) and outlet (1.2) of reactive gases until the reduction of the amount of reactive gases contained in the feed tank (1) up to a value lower than a pre-established reference value is obtained.

**4.** Procedure for eliminating polycyclic aromatic hydrocarbons and other volatile and semi-volatile compounds according to any of claims 2 and 3 **characterised in that** following reduction of the amount of reactive gases surrounding the carbon nanofibres in the feed tank (1) to the value of the pre-established reference, in a first step the means of closure of the gas inlet and outlet are closed and in a second step the means of closure (2) situated at the outlet of the feed tank (1) to enable the supply of the carbon nanofibres from the feed tank to the furnace interior (5).

**5.** Procedure for eliminating Polycyclic aromatic hydrocarbons and other volatile and semi-volatile compounds according to any of claims 2 to 4 **characterised in that** the furnace (5) is provided with more than one feed tank (1) for the replacement of reactive gases which surround the carbon nanofibres until their quantity is reduced to below a pre-established reference value, so that the furnace (5) can be fed in an uninterrupted manner.

**6.** Procedure for eliminating Polycyclic aromatic hydrocarbons and other volatile and semi-volatile compounds according to claims 1 or 2 **characterised in that** following the process of replacement of the amount of reactive gases surrounding the carbon nanofibres up to a pre-established reference for an inert atmosphere, and prior to the introduction of the nanofibres in the interior of the furnace (5) body, the fluidification of the nanofibres is carried out by means of mechanical procedures.

**7.** Procedure for eliminating Polycyclic aromatic hydrocarbons and other volatile and semi-volatile compounds according to claim 6 **characterised in that** the mechanical fluidification procedures of the carbon nanofibres consist of a forced passage of said carbon nanofibres through one or more perforations of narrow parts.

**8.** Procedure for eliminating Polycyclic aromatic hydrocarbons and other volatile and semi-volatile compounds according to claim 7, **characterised in that** the perforations take the form of a sieve.

**9.** Procedure for eliminating Polycyclic aromatic hydrocarbons and other volatile and semi-volatile compounds according to claim 7 or 8 **characterised in that** the forced passage is carried out by the action of a part which sweeps over the perforations or narrow parts.

**10.** Procedure for eliminating polycyclic aromatic hydrocarbons and other volatile and semi-volatile compounds according to claims 1 and 6, **characterised in that** the introduction of the carbon nanofibres once they have been fluidified are carried into the furnace (5) by means of transport from the feed tank outlet to the interior of the furnace (5).

**11.** Procedure for eliminating Polycyclic aromatic hydrocarbons and other volatile and semi-volatile compounds according to claim 10, **characterised in that** the system (3.1) for conveying the carbon nanofibres consists of a screw conveyor.

**12.** Procedure for eliminating polycyclic aromatic hydrocarbons and other volatile and semi-volatile compounds according to claim 11 **characterised in that** the internal rotary body (5.2) of the furnace (5) is provided with means for varying its speed (ω) of rotation.

**13.** Procedure for eliminating Polycyclic aromatic hydrocarbons and other volatile and semi-volatile compounds according to claim 12, **characterised in that** the furnace (5) is provided with means for varying its inclination.

**14.** Procedure for eliminating polycyclic aromatic hydrocarbons and other volatile and semi-volatile compounds according to claim 12 and 13
**characterised in that** the speed of the axial advance and the residence time of the carbon nanofibres in the furnace (5) is carried out by a combined effect of the furnace inclination (5) and the rotation movement of the rotary body thereof.

**15.** Procedure for eliminating polycyclic aromatic hydrocarbons and other volatile and semi-volatile compounds according to claim 1 **characterised in that** the furnace (5) incorporates means (5.8) for applying mechanical vibration on the internal rotary body (5.2) to prevent the nanofibres from adhering to the internal walls of the furnace (5).

**16.** Procedure for eliminating polycyclic aromatic hydrocarbons and other volatile and semi-volatile compounds according to claim 15 **characterised in that** the means (5.8) for applying mechanical vibration in order to prevent the nanofibres from adhering to the internal walls of the furnace (5) comprise balls (5.8.1) which act through impact.

**17.** Procedure for eliminating polycyclic aromatic hydrocarbons and other volatile and semi-volatile compounds according to claim 16, **characterised in that** the internal rotary body (5.2) is provided with housings solid to the structure which incorporate in their interior moveable balls (5.8.1) due to the play available, so that they cause impact in the interior of the housings with the rotation of the internal rotary body (5.2) of the furnace (5).

**18.** Procedure for eliminating polycyclic aromatic hydrocarbons and other volatile and semi-volatile compounds according to claim 1 **characterised in that** the internal rotary body (5.2) of the furnace (5) is provided with internal blades for improved agitation of the carbon nanofibres in the interior of the internal rotary body (5.2) of the furnace (5).

**19.** Procedure for eliminating polycyclic aromatic hydrocarbons and other volatile and semi-volatile compounds according to claim 1 **characterised in that** the means (5.5)for heating the furnace (5) comprise more than one heating module (5.5.1).

**20.** Procedure for eliminating polycyclic aromatic hydrocarbons and other volatile and semi-volatile compounds according to claim 19, **characterised in that** each heating module (5.5.1) is provided with an independent temperature control.

**21.** Procedure for eliminating polycyclic aromatic hydrocarbons and other volatile and semi-volatile compounds according to claim 1,**characterised in that** the working temperature in the interior of the rotary body of the furnace (5) is between 120° to 1000°C.

**22.** Procedure for eliminating polycyclic aromatic hydrocarbons and other volatile and semi-volatile compounds according to claim 21, **characterised in that** the working temperature in the interior of the rotary body of the furnace (5) is between 300° to 600°C.

**23.** Procedure for eliminating polycyclic aromatic hydrocarbons and other volatile and semi-volatile compounds according to claim 1 **characterised in that** the working atmosphere in the interior of the rotary body of the furnace (5) is above atmospheric pressure.

**24.** Procedure for eliminating polycyclic aromatic hydrocarbons and other volatile and semi-volatile compounds according to claim 1 **characterised in that** the extraction of the carrier gases together with the desorbed compounds is carried out by means of a pipe (8) which evacuates the internal gases of the furnace situated at the furnace entrance (5) preferably close to the feed point of the carbon nanofibres.

**25.** Procedure for eliminating polycyclic aromatic hydrocarbons and other volatile and semi-volatile compounds according to claim 1, **characterised in that** the carrier gas extracted from the furnace (5) with the desorbed compounds passes through a gas washing system (9) for condensation of said compounds.

**26.** Procedure for eliminating polycyclic aromatic hydrocarbons and other volatile and semi-volatile compounds according to claim 1, **characterised in that** there is an intermediate point of the axial route of the internal rotary body (5.2) of the furnace (5) which defines a final section from said point to the end of the axial route of the rotary body of the furnace (5), where the carbon nanofibres are free from polycyclic aromatic hydrocarbons and other volatile and semi-volatile compounds.

**27.** Procedure for eliminating polycyclic aromatic hydrocarbons and other volatile and semi-volatile compounds according to claim 1 **characterised in that** in the final section where the nanofibres are free from polycyclic aromatic hydrocarbons and other volatile and semi-volatile carbons a process of superficial functionalisation is carried out on said carbon nanofibres through the incorporation to the gas flow in the furnace (5) interior of a substance with the capacity for creating one or more types of functional groups on the surface of the carbon nanofibres.

**28.** Procedure for eliminating polycyclic aromatic hydrocarbons and other volatile and semi-volatile compounds according to claim 27, **characterised in that** the substance with capacity for creation of one or more functional groups on the surface of the carbon nanofibres is an organic, inorganic, organometallic compound or a mixture of these.

**29.** Procedure for eliminating polycyclic aromatic hydrocarbons and other volatile and semi-volatile compounds according to claim 28 **characterised in that** the substance with capacity for creation of one or more functional groups on the surface of the carbon nanofibres is among one of the following: air, oxygen, carbon dioxide, ammonia, ozone, hydrogen peroxide, hydrogen fluoride, hydrogen chloride, hydrogen cyanide, and water vapour.

**30.** Procedure for eliminating polycyclic aromatic hydrocarbons and other volatile and semi-volatile compounds according to claims 27-29 **characterised in that** on some of the functional groups existing on the surface of the carbon nanofibres one or more coupling agents are made to react comprising bi-functional molecules for compatibilising the carbon nanofibres with other polymeric substances with which they are required to interact in subsequent applications or processes.

**31.** Procedure for eliminating polycyclic aromatic hydrocarbons and other volatile and semi-volatile compounds according to claim 30 **characterised in that** the coupling agents constituting bi-functional molecules are among the following: organosilanes, organozirconates, organotitanates, organoaluminates or Grignard reagents.

**32.** Procedure for eliminating polycyclic aromatic hydrocarbons and other volatile and semi-volatile compounds according to claim 27-31 **characterised in that** in the final section where the carbon nanofibres are free of polycyclic aromatic hydrocarbons and other volatile and semi-volatile compounds, a coating process is carried out on at least one part of the surface of the carbon nanofibres by means of a chemical deposition in vapour phase of adequate precursor compounds.

**33.** Procedure for eliminating polycyclic aromatic hydrocarbons and other volatile and semi-volatile compounds according to claim 32 **characterised in that** the precursor compounds are among the following: organometallic compounds, carbon monoxide, halide, salts of Si, Zr, B, Al, W, Ni, Ti, Co, Zn, Y, Mg, Cu, Sn, Fe, Sb, V, Ag, Ru, , or mixtures thereof.
